# EUROPÄISCHE PATENTSCHRIFT

(11) **EP 3 916 237 B1**
(45) Veröffentlichungstag und Bekanntmachung des Hinweises auf die Patenterteilung: **04.10.2023**
(21) Anmeldenummer: 21173019.7
(22) Anmeldetag: 10.05.2021
(51) Int. Cl.: F04D 29/046, F04D 29/02, F04D 13/06, F16C 33/04, F16C 33/16

(54) **KEISELPUMPE MIT MINDESTENS EINER HYDRODYNAMISCHEN GLEITLAGERANORDNUNG**
CENTRIFUGAL PUMP WITH AT LEAST ONE HYDRODYNAMIC SLIDE BEARING ASSEMBLY
POMPE CENTRIFUGE POURVUE D'AU MOINS UN DISPOSITIF PALIER LISSE HYDRODYNAMIQUE

(30) Priorität: 26.05.2020 DE 102020003140
(43) Veröffentlichungstag der Anmeldung: 01.12.2021
(73) Patentinhaber: KSB SE & Co. KGaA, 67227 Frankenthal (DE)
(72) Erfinder: GRÖSCHEL, Jürgen, 67227 Frankenthal (DE); KALB, Jürgen, 67227 Frankenthal (DE); LAY, Markus, 67227 Frankenthal (DE); SEHR, Frank, 67227 Frankenthal (DE)

(56) Entgegenhaltungen:
- WO-A1-2015/146741
- DE-A1-102013 005 926
- DE-A1-102019 001 120
- US-A1- 2017 089 354

## Beschreibung

Die Erfindung betrifft eine Kreiselpumpe mit mindestens einer hydrodynamischen Gleitlageranordnung, wobei jede Gleitlageranordnung mindestens ein drehfest mit einer Welle verbundenes Element und mindestens ein feststehendes Gegenelement umfasst.

Das Konstruktionsprinzip von hermetisch abgedichteten Pumpen wie einer Spaltrohrpumpe oder einer Magnetkupplungspumpe begründet, dass der Rotor im Allgemeinen vollständig vom Fördermedium umgeben ist, wodurch der Einsatz von Gleitlageranordnungen bei solchen Pumpen erforderlich ist. In einer von einem Spaltrohr umschlossenen Kammer bewegt sich eine um eine Drehachse drehbare und antreibbare Laufradwelle, auf der ein oder mehrere Laufräder angeordnet und mit mindestens einer Gleitlageranordnung gelagert sind. Dabei wirkt eine mit der Laufradwelle drehfest verbundene Lagerhülse mit einer im Pumpengehäuse befestigten Lagerbuchse als Gleitlageranordnung zusammen.

Allgemein weisen Gleitlager zwei sich relativ zueinander bewegende Teile auf, die aufeinander gegen den durch Gleitreibung verursachten Widerstand gleiten. Zwischen den beiden relativ zueinander bewegenden Teilen des Gleitlagers befindet sich ein Schmierfilm, welcher sich durch Hydrodynamik aufbaut, um die Kontaktflächen der beiden Teile gegen die Lagerkraft zu trennen. Beim An- bzw. Auslaufen einer Bewegung reicht die Hydrodynamik nicht aus, so dass keine reine Gleitreibung, sondern vielmehr eine Mischreibung entsteht. Dabei kann an den Kontaktflächen der zueinander bewegten Teile direkter Kontakt ohne schützende Schmierfilmschicht entstehen, was zu einem hohen Verschleiß der Kontaktschichten führen kann.

Derartige Pumpentypen mit Gleitlageranordnungen sind weit verbreitet und finden in nahezu allen Bereichen in der Industrie ihre Anwendung. Beispielgebend sind derartige Pumpen mit Gleitlageranordnungen in der DE 195 41 245 A1, in der DE 195 41 247 A1 und in der EP 0 752 538 A2 offenbart. Aus der EP 0 771 956 B1 ist eine derartige Magnetkupplungspumpe mit einer Gleitlagerung bekannt, bei der die stationären Lagerteile aus einem keramischen Werkstoff, beispielsweise Siliciumcarbid, in einem als äußeres Gehäuse bezeichneten Lagerringträger aufgenommen werden und die um die Drehachse rotierenden Lagerteile aus Silicumcarbid in metallischen Trägerteilen auf der Welle positioniert werden.

Bedingt durch die vielfältigen Anwendungsfälle von Magnetkupplungspumpen respektive Spaltrohrpumpen kommt der Werkstoffauswahl für die Lagerbuchsen und -hülsen als auch der Befestigung dieser Bauteile eine grundlegende Bedeutung zu. Die Werkstoffauswahl erfolgt hauptsächlich im Hinblick auf günstige Gleiteigenschaften, hohe Verschleißfestigkeit, gute Korrosionsbeständigkeit und gute Trockenlaufeigenschaften. In der DE 10 2013 004 339 A1 ist eine Gleitlageranordnung offenbart, die entweder vollständig oder bei der zumindest die Kontaktflächen der Gleitlageranordnung aus tribologisch wirksamem Kunststoff hergestellt sind, um die Gleiteigenschaften im Mischreibungsbetrieb zu verbessern.

In der DE 10 2018 104 541 A1 ist ein Gleitlager aus nichtrostendem Stahl einer Nassläuferpumpe beschrieben, dessen Kontaktflächen mit einer ein- oder mehrlagigen amorphen Kohlenstoffschicht oder einer CVD-Diamantschicht sowie einem Gleitlack beschichtet

Die Dokumente WO 2015/146741 A1, US 2017/089354 A1, DE 10 2013 005926 A1 und DE 10 2019 001120 A1 gehören ebenfalls zum technischen Hintergrund der Erfindung.

Aufgabe der Erfindung ist es, eine Kreiselpumpe mit mindestens einer mit Fördermedium geschmierten Lageranordnung anzugeben, bei der eine dauerhafte Beschädigung der Bauteile wirksam verhindert wird. Die Maßnahme soll nicht zu einer zusätzlichen Baulänge der Strömungsmaschine führen. Auch sollen ein eigenes Gehäuse sowie der Einsatz eines zusätzlichen Schmiermittels vermieden werden. Zudem soll die Lageranordnung eine lange Lebensdauer aufweisen und sich durch eine hohe Zuverlässigkeit auszeichnen. Sie soll zudem eine einfache Montage gewährleisten, sowie für Wartungsarbeiten gut zugänglich sein. Weiterhin soll sich die Lageranordnung durch möglichst geringe Herstellungskosten auszeichnen.

Diese Aufgabe wird erfindungsgemäß durch eine Kreiselpumpe mit mindestens einer hydrodynamischen Gleitlageranordnung nach Anspruch 1 gelöst. Bevorzugte Varianten sind den Unteransprüchen, der Beschreibung und den Zeichnungen zu entnehmen.

Das erfindungsgemäße Element kann beispielsweise als Radiallagerhülse, als Axiallagering und/oder als Axial-Radiallagerhülse, welche drehfest mit einer Welle verbunden sind, und das erfindungsgemäße Gegenelement als Axial-Radial-Lagerbuchse und/oder als Radial-Lagerbuchse ausgebildet sein. Eine Kohlenstoffschicht, die auf einem Element aufgebracht ist, in Kombination mit einem graphithaltigen Gegenelement verhindert wirksam eine Beschädigung der Bauteile im Falle eines Anstreifens von Element und Gegenelement, insbesondere bei An- oder Abfahrvorgängen beim Auftreten einer sogenannten Mischreibung.

Unter den Kohlenstoffschichten werden Schichten verstanden, in denen Kohlenstoff der überwiegende Bestandteil ist. Die Kohlenstoffschicht kann beispielsweise mit einem PVD- (engl. Physical Vapor Deposition, einer physikalischen Gasphasenabscheidung etwa durch Verdampfen oder Sputtern) oder einem CVD-Verfahren (engl. Chemical Vapor Deposition; Chemische Gasphasenabscheidung) aufgebracht werden. Vorzugsweise wird die Schicht auf das als Radiallagerhülse, als Axiallagering und/oder als Axial-Radiallagerhülse ausgeführte Element aufgebracht, insbesondere an möglichen Berührungsflächen von Element und Gegenelement.

Erfindungsgemäß handelt es sich um eine tetraedrische wasserstofffreie amorphe Kohlenstoffschicht, die auch als ta-C Schicht bezeichnet wird. Die dem Kristallgitter von Graphit zugehörigen Atombindungen (insgesamt jeweils 3) kennzeichnet man mit der Bezeichnung "sp2". Dabei liegt eine sp2-Hybridisierung vor.

Bei einer Diamantschicht bildet jedes Kohlenstoffatom mit vier benachbarten Atomen eine tetraederförmige Anordnung. Bei dieser räumlichen Anordnung sind alle Atomabstände gleich gering. Es wirken daher sehr hohe Bindungskräfte zwischen den Atomen, und zwar in allen Raumrichtungen. Daraus resultieren die hohe Festigkeit und die extreme Härte des Diamanten. Die dem Kristallgitter von Diamanten zugehörigen Atombindungen, insgesamt jeweils vier, kennzeichnet man mit der Bezeichnung "sp3". Somit liegt eine sp3-Hybridisierung vor.

Bei einer besonders günstigen Variante besteht die Kohlenstoffschicht aus einer Mischung von sp3- und sp2-hybridisiertem Kohlenstoff. Diese Schicht ist durch eine amorphe Struktur gekennzeichnet. In dieses Kohlenstoffnetzwerk können auch Fremdatome wie Wasserstoff, Silizium, Wolfram oder Fluor eingebaut sein.

Die erfindungsgemäße Anordnung einer Kohlenstoffschicht auf einem Element in Kombination mit einem graphithaltigen Gegenelement führt zu einer erheblichen Reduzierung des Abtrags von gegeneinander reibenden Bauteilen. Durch die Materialkombination von Element und Gegenelement wird die Gleitfähigkeit so weit gesteigert, dass selbst bei einem Anstreifen eine Beschädigung von Element und Gegenelement wirksam verhindert wird.

Bei einer alternativen Variante ist es denkbar, dass die Beschichtung in Form von nitridischen Hartstoffschichten und/oder Gleitlacken ausgeführt werden könnte.

Bei einer besonders günstigen Variante der Erfindung wird die Kohlenstoffschicht als Beschichtung auf das Element aufgebracht. Die Dicke der Schicht beträgt vorteilhafterweise mehr als 0,5 µm, vorzugsweise mehr als 1,0 µm, insbesondere mehr als 1,5 µm und/oder weniger als 14 µm, vorzugsweise weniger als 12 µm, insbesondere weniger als 8 µm.

Durch die Anordnung der Kohlenstoffschicht auf dem Element wird eine glatte axiale Oberfläche mit Antihafteigenschaften geschaffen, bei der der Mittenrauheitswert Rₐ der Kohlenstoffschicht weniger als 0,7 µm, vorzugsweise weniger als 0,5 µm, insbesondere weniger als 0,3 µm beträgt.

Bei einer Variante der Erfindung wird das Element mittels einer einfachen Maskierungsvorrichtung abgedeckt, um nur den gewünschten Beschichtungsbereich frei zu lassen. Dabei können auch mehrere Elemente gleichzeitig in den Beschichtungsreaktor, der vorzugsweise als Vakuumkammer ausgeführt ist, eingebracht werden, wobei bei mäßiger thermischer Belastung, die ta-C Beschichtung aufgebracht wird. Die ta-C-Beschichtung weist einen sehr geringen Reibbeiwert bei gleichzeitig sehr guter chemischer Beständigkeit auf. Die Härte der Beschichtung kommt der Härte von Diamanten sehr nahe, wobei die Härte mehr als 20 GPa, vorzugsweise mehr als 30 GPa, insbesondere mehr als 40 GPa, aber weniger als 120 GPa, vorzugsweise weniger als 110 GPa, insbesondere weniger als 100 GPa beträgt.

Mit durchschnittlich 40 bis 75 GPa sind ta-C Beschichtungen härter als a-C:H Schichten. Zudem enthält ta-C keinen Wasserstoff. Deshalb ist davon auszugehen, dass ta-C im Kontakt mit Wasser (bei Temperaturen oberhalb 80 °C) beständiger ist als a-C:H. Im Kontakt mit anderen - insbesondere polaren - Flüssigkeiten, die Moleküle enthalten, in denen Wasserstoff gebunden ist, könnte ta-C ebenfalls besser beständig sein als a-C:H.

Vorzugsweise wird die Kohlenstoffschicht nicht unmittelbar auf das Element aufgebracht, sondern es wird zunächst eine Haftvermittlerschicht vorgesehen. Diese besteht vorzugsweise aus einem Werkstoff, der sowohl gut an Stahl haftet als auch eine Kohlenstoffdiffusion verhindert, z. B. durch die Bildung stabiler Carbide. Als Haftvermittlungsschichten, die diese Anforderungen erfüllen, kommen vorzugsweise dünne Schichten aus Chrom, Titan oder Silizium zum Einsatz. Insbesondere haben sich Chrom und Wolframcarbid als Haftvermittler bewährt.

Bei einer vorteilhaften Variante der Erfindung weist die Beschichtung eine Haftvermittlerschicht auf, die vorzugsweise einen Chromwerkstoff beinhaltet. Vorzugsweise besteht die Haftvermittlerschicht zu mehr als 30 Gew.-%, vorzugsweise mehr als 60 Gew.-%, insbesondere mehr als 90 Gew.-% aus Chrom.

Bei der erfindungsgemäßen ta-C Beschichtung, in Materialkombination mit einem graphithaltigen Gegenelement, handelt es sich um eine einfache, schnell realisierbare und wirtschaftliche Gleitlageranordnung in Kreiselpumpen. Die erfindungsgemäße Beschichtung weist neben einer sehr großen Härte auch hervorragende Gleiteigenschaften und eine gute chemische Beständigkeit auf.

Zudem ermöglicht die Erfindung auch eine Beschichtung von dünnwandigen Elementen mit kleineren Abmessungen, was mit herkömmlichen Beschichtungen nur sehr schwer realisierbar war.

Vorzugsweise können zur Beschichtung PECVD/PACVD-Verfahren eingesetzt werden. Dabei erfolgt eine Plasmaanregung der Gasphase durch die Einkopplung von gepulster Gleichspannung ("pulsed DC"), mittelfrequenter (KHz-Bereich) oder hochfrequenter (MHz-Bereich) Leistung. Aus Gründen einer maximierten Prozessvariabilität bei unterschiedlichen Werkstückgeometrien und Beladungsdichten hat sich zudem die Einkopplung von gepulster Gleichspannung bewährt.

Idealerweise werden zur Beschichtung PVD Verfahren eingesetzt. Diese Verfahren sind besonders einfach und weisen eine niedrige Prozesstemperatur auf. Diese Technologie führt zu Schichten, in die je nach Bedarf auch Fremdatome eingebaut sein können. Die Prozessführung erfolgt vorzugsweise so, dass Gefüge- und Dimensionsänderungen der zu beschichtenden Werkstoffe (metallisch, hoch- und niedrig legierte Edelstähle, etc.) ausgeschlossen sind.

Gegenüber einer CVD-Diamantschicht hat die ta-C-Beschichtung den Vorteil, dass die Beschichtungstemperatur für CVD-Diamantschichten 600 bis 1000 °C beträgt und für amorphe Kohlenstoffschichten wie ta-C deutlich unter 500 °C liegt. Dies ist insbesondere für das Beschichten metallischer Werkstoffe von hoher technischer Relevanz. Die Herstellung von PVD-Diamantschichten ist nicht möglich.

Erfindungsgemäß können mit dem Verfahren normale standardmäßige Serienteile wie Radiallagerhülsen, Axiallageringe und/oder Axial-Radiallagerhülsen aus korrosionsbeständigem chromhaltigem Stahl, aus austenitisch-ferritischem Duplexstahl oder aus einer Nickelbasis-Legierung mit ta-C an den möglichen Berührungsflächen beschichtet werden. Dadurch wird ein enorm verbessertes Verschleiß- und Gleitverhalten erreicht. Elemente auf metallischer Basis zeichnen sich durch ihre verbesserte Duktilität bei einer gleichzeitig kostengünstigeren Herstellung aus. Darüber hinaus sind diese Elemente auch leichter zu recyceln als beispielsweise Keramikteile.

Vorzugsweise ist das Gegenelement als Axial-Radial-Lagerbuchse, als Radial-Lagerbuchse und/oder als Axial-Lagerring ausgebildet, welches feststehend mit dem Gehäuse von Kreiselpumpen, insbesondere Spaltrohrmotorpumpen oder Magnetkupplungspumpen, verbunden ist. Erfindungsgemäß besteht das Gegenelement aus mehr als 70 Gew.-%, vorzugsweise mehr als 80 Gew.-%, insbesondere mehr als 90 Gew.-% aus Graphit.

In einer vorteilhaften Variante der Erfindung ist das Gegenelement überwiegend aus einem harzgebundenen Graphit hergestellt. In verschiedenen alternativen Varianten der Erfindung könnte das Gegenelement aus Graphit mit einer Antimon- und/oder Kupferimprägnierung bestehen. Weiterhin ist es auch denkbar, dass das Gegenelement aus einem Faserverbundwerkstoff mit einem Graphitgehalt von mehr als 70 Gew.-% besteht. Als besonders günstig erweist es sich, wenn die Matrix aus Graphit besteht. Die Fasern können aus einem keramischen Werkstoff, Glasfasern, Kunststoff oder aus Kohlefasern bestehen.

Optional weist das Gegenelement an einer oder beiden Stirnseiten mindestens einen halbkreisförmigen, radial verlaufenden Kanal zum besseren Transport des Schmiermediums in die Gleitlageranordnung auf. In einer besonders vorteilhaften Variante sind mehr als drei, vorzugsweise mehr als vier, insbesondere mehr als fünf Kanäle in den Stirnseiten der Radial-Axial-Lagerbuchse angeordnet.

Weitere Merkmale und Vorteile der Erfindung ergeben sich aus der Beschreibung von Ausführungsbeispielen anhand der Zeichnungen und aus den Zeichnungen selbst. Dabei zeigt:
- Figur 1: eine schematische Darstellung einer Kreiselpumpe mit einem Spaltrohrmotor,
- Figur 2: eine schematische Darstellung einer hydrodynamischen Gleitlageranordnung,
- Figur 3: eine schematische Darstellung einer weiteren hydrodynamischen Gleitlageranordnung,
- Figur 4: eine schematische Darstellung einer Stirnseite einer Radial-Axial-Gleitlagerbuchse.

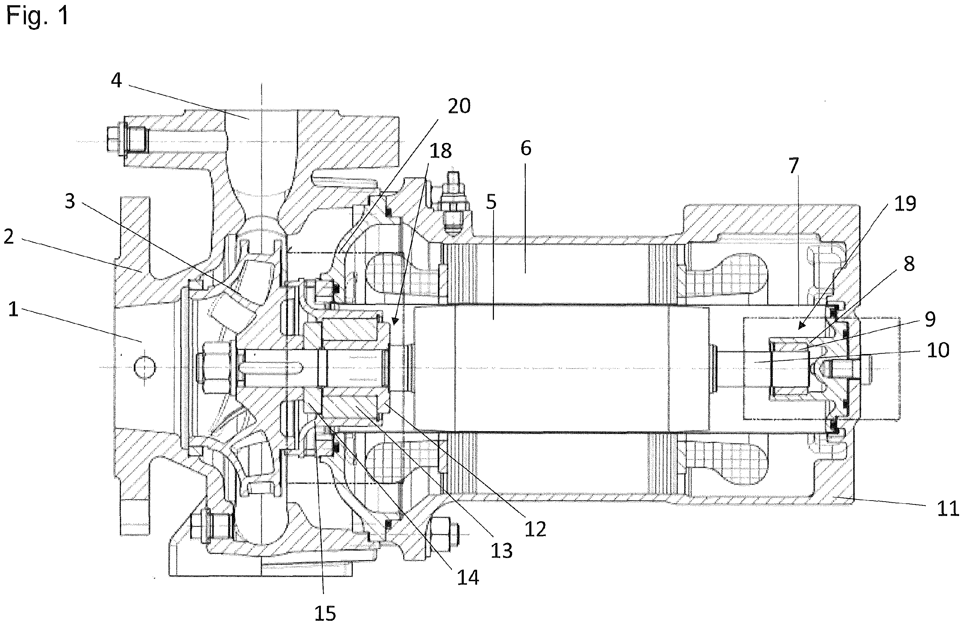

Die Figur 1 zeigt eine beispielhafte Kreiselpumpe in Form einer Spaltrohrmotorpumpe mit einem Pumpenteil und einem elektrischen Antrieb. Der Pumpenteil der Spaltrohrmotorpumpe weist ein Pumpengehäuse 2 mit einer Einlassöffnung 1 zum Ansaugen eines Fördermediums und einer Auslassöffnung 4 zum Ausstoßen des Fördermediums auf. Der Gehäusedeckel 20 ist an der der Einlassöffnung 1 gegenüberliegende Seite des Pumpengehäuses 2 angeordnet. In der Mitte des Gehäusedeckels 20 ist der Lagerträgerdeckel 15 mit der Gleitlageranordnung pumpenseitig 18 angeordnet.

An den Lagerträgerdeckel 15 schließt ein Spaltrohr 7 an, das den medienberührenden Raum hermetisch abdichtet. Innerhalb des Spaltrohres 7 ist die Welle 10 angeordnet, die mit einem Rotor 5 verbunden ist. Das umlaufende Magnetfeld des Stators 6 induziert ein entgegen gerichtetes Magnetfeld in den Rotor 5. Es treibt den Rotor 5 vor sich her und setzt ihn dadurch in Bewegung. Auf der Welle 10 ist ein Pumpenlaufrad 3 fixiert, welches kinetische Energie durch die Drehbewegung auf das Fördermedium überträgt.

Der Stator 6 ist von einem Gehäuse 11 umschlossen, an welchem ein Endlagerdeckel 8 angebracht ist, der wiederum das Spaltrohr 7 trägt. Am Endlagerdeckel 8 ist eine Gleitlageranordnung motorseitig 19 angeordnet, die das Ende der Welle 10 lagert.

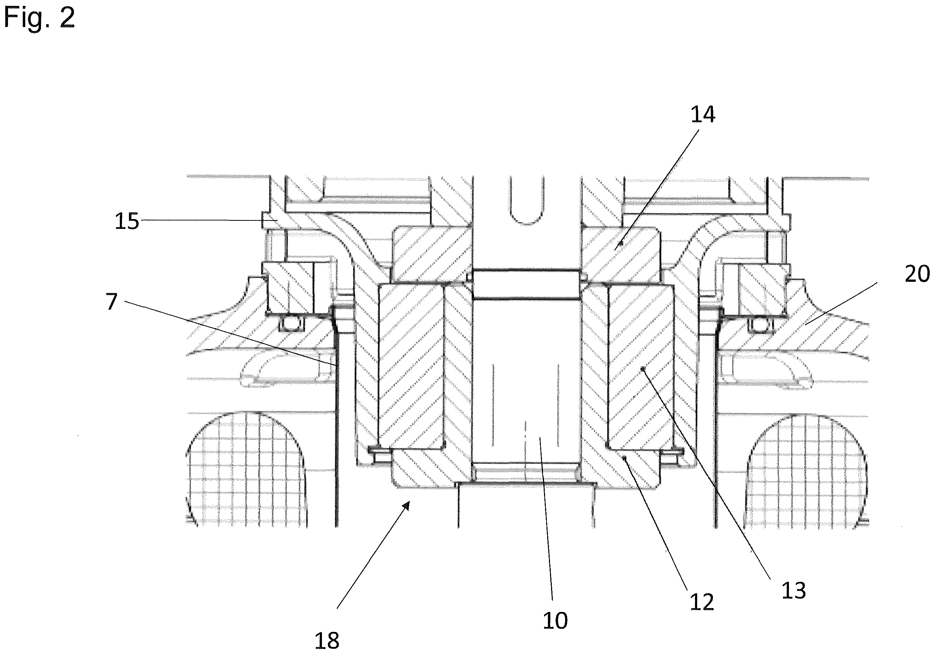

Die Figur 2 zeigt vergrößert die Gleitlageranordnung 18. Mit der Welle 10 sind ein Axial-Lagerring 14 und eine Axial-Radiallagerhülse 12 drehfest in Form einer Welle-Nabe-Verbindung verbunden. Der Axial-Lagerring 14 und die Axial-Radiallagerhülse 12 sind aus chromhaltigem, nichtrostendem Stahl, die mit einer ta-C Beschichtung versehen wurden. Der Lagerträgerdeckel 15 wird mithilfe des Gehäusedeckels 20 positioniert und trägt die feststehende Axial-Radial-Lagerbuchse 13 aus Graphit. Der Axial-Lagerring 14 kann auch mehrteilig ausgebildet sein. Ebenso kann die Axial-Radial-Lagerbuchse 13 auch mehrteilig ausgebildet sein.

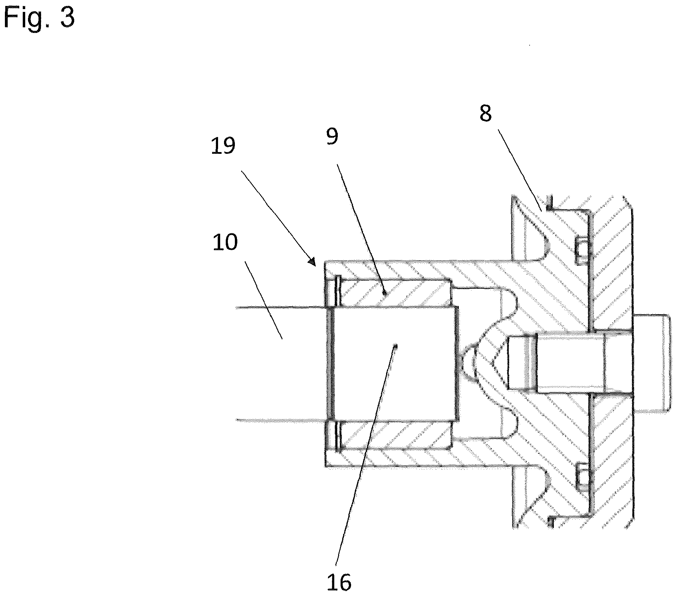

Die Figur 3 zeigt die hydrodynamische Gleitlageranordnung 19. Mit dem Endlagerdeckel 8 ist feststehend die Radial-Lagerbuchse 9 aus Graphit verbunden. In der Buchse gleitet die Radiallagerhülse 16, die drehfest auf die Welle 10 aufgeschrumpft ist. Die Radiallagerhülse 16 ist aus chromhaltigem, nichtrostendem Stahl, der an der Kontaktfläche zur Radial-Lagerbuchse 9 mit ta-C beschichtet ist.

In einer nicht dargestellten Variante der Erfindung ist eine Gleitlageranordnung als axiales Gleitlager ausgeführt, bei dem ein mit einer Welle drehfest verbundener Axial-Lagerring aus chromhaltigem, nichtrostendem Stahl, der an der Kontaktfläche mit ta-C beschichtet ist, gegen einen graphithaltigen Axial-Lagerring gleitet, der feststehend mit einem Pumpengehäuse verbunden ist.

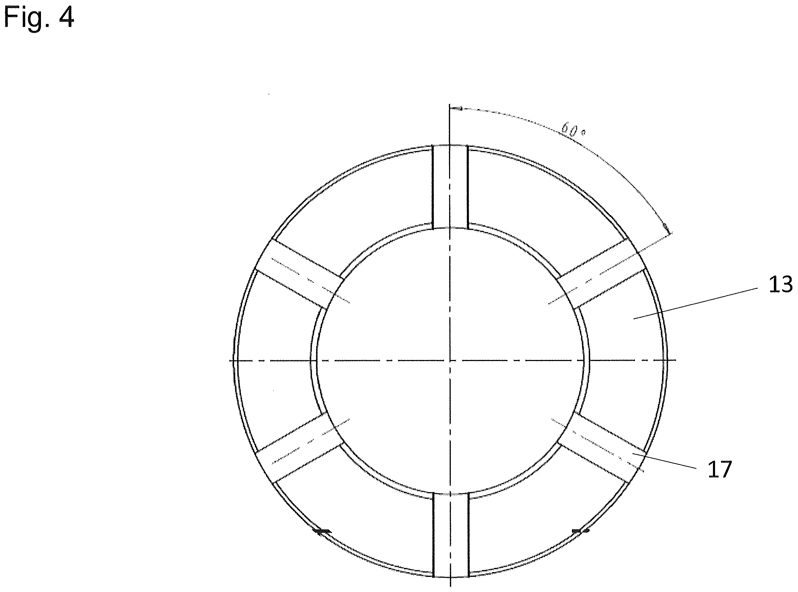

Die Figur 4 zeigt eine Draufsicht der Stirnseite einer Radial-Axial-Gleitlagerbuchse 13 aus Graphit. Die Stirnseite ist an der Außen- und Innenseite jeweils mit einer 45 ° Fase ausgebildet. An der beispielgebenden Darstellung der Stirnseite sind sechs halbkreisförmige Kanäle angeordnet, die in einem Abstand von 60 ° zueinander beabstandet sind.

## Patentansprüche

1. Kreiselpumpe mit mindestens einer hydrodynamischen Gleitlageranordnung (18, 19), wobei jede Gleitlageranordnung (18, 19) mindestens ein drehfest mit einer Welle (10) verbundenes Element (12, 14, 16) und mindestens ein feststehendes Gegenelement (9, 13) umfasst, wobei das Element (12, 14, 16) mit einer Kohlenstoffschicht versehen ist, wobei es sich um eine amorphe Kohlenstoffschicht handelt und das Gegenelement (9, 13) einen graphithaltigen Werkstoff aufweist, **dadurch gekennzeichnet, dass** es sich um eine tetraedrische wasserstofffreie amorphe Kohlenstoffschicht handelt, wobei der Mittenrauheitswert Rₐ der Kohlenstoffschicht weniger als 0,7 µm beträgt und das Gegenelement (9, 13) zu mehr als 70 Gew.-% aus Graphit besteht.

2. Kreiselpumpe nach Anspruch 1, **dadurch gekennzeichnet, dass** die Dicke der Kohlenstoffschicht mehr als 0,5 µm, vorzugsweise mehr als 1,0 µm, insbesondere mehr als 1,5 µm und/oder weniger als 14 µm, vorzugsweise weniger als 12 µm, insbesondere weniger als 8 µm beträgt.

3. Kreiselpumpe nach einem der Ansprüche 1 bis 2, **dadurch gekennzeichnet, dass** der Mittenrauheitswert Rₐ der Kohlenstoffschicht weniger als 0,5 µm, insbesondere weniger als 0,3 µm beträgt.

4. Kreiselpumpe nach einem der Ansprüche 1 bis 3, **dadurch gekennzeichnet, dass** das Gegenelement (9, 13) zu mehr als 80 Gew.-%, insbesondere mehr als 90 Gew.-% aus Graphit besteht.

5. Kreiselpumpe nach einem der Ansprüche 1 bis 4, **dadurch gekennzeichnet, dass** mindestens ein Gegenelement (9, 13) überwiegend aus einem harzgebundenen Graphit besteht.

6. Kreiselpumpe nach einem der Ansprüche 1 bis 5, **dadurch gekennzeichnet, dass** mindestens ein Gegenelement (13) als Axial-Radial-Lagerbuchse ausgebildet ist.

7. Kreiselpumpe nach einem der Ansprüche 1 bis 6, **dadurch gekennzeichnet, dass** mindestens ein Gegenelement (9) als Radial-Lagerbuchse ausgebildet ist.

8. Kreiselpumpe nach einem der Ansprüche 1 bis 7, **dadurch gekennzeichnet, dass** mindestens ein Gegenelement als Axial-Lagerring ausgebildet ist.

9. Kreiselpumpe nach einem der Ansprüche 1 bis 8, **dadurch gekennzeichnet, dass** mindestens ein Gegenelement (9, 13) an mindestens einer Stirnseite mindestens einen radialverlaufenden Kanal (17) aufweist.

10. Kreiselpumpe nach einem der Ansprüche 1 bis 9, **dadurch gekennzeichnet, dass** die Oberflächenhärte der mit Kohlenstoff beschichteten Elemente (12, 14, 16) mehr als 20 GPa, vorzugsweise mehr als 30 GPa, insbesondere mehr als 40 GPa und/oder weniger als 120 GPa, vorzugsweise weniger als 110 GPa, insbesondere weniger als 100 GPa beträgt.

## Claims

1. Centrifugal pump having at least one hydrodynamic sliding bearing arrangement (18, 19), wherein each sliding bearing arrangement (18, 19) comprises at least one element (12, 14, 16) connected to a shaft (10) for conjoint rotation therewith and at least one stationary mating element (9, 13), wherein the element (12, 14, 16) is provided with a carbon layer, wherein the carbon layer is an amorphous carbon layer and the mating element (9, 13) comprises a graphite-containing material, **characterized in that** the amorphous carbon layer is a tetrahedral hydrogen-free amorphous carbon layer, wherein the mean roughness value Rₐ of the carbon layer is less than 0.7 um and the mating element (9, 13) consists of graphite to an extent of more than 70% by weight.

2. Centrifugal pump according to Claim 1, **characterized in that** the thickness of the carbon layer is more than 0.5 um, preferably more than 1.0 um, in particular more than 1.5 um and/or less than 14 µm, preferably less than 12 µm, in particular less than 8 µm.

3. Centrifugal pump according to either of Claims 1 and 2, **characterized in that** the mean roughness value Rₐ of the carbon layer is less than 0.5 um, in particular less than 0.3 um.

4. Centrifugal pump according to one of Claims 1 to 3, **characterized in that** the mating element (9, 13) consists of graphite to an extent of more than 80% by weight, in particular more than 90% by weight.

5. Centrifugal pump according to one of Claims 1 to 4, **characterized in that** at least one mating element (9, 13) consists predominantly of a resin-bonded graphite.

6. Centrifugal pump according to one of Claims 1 to 5, **characterized in that** at least one mating element (13) is in the form of an axial-radial bearing bushing.

7. Centrifugal pump according to one of Claims 1 to 6, **characterized in that** at least one mating element (9) is in the form of a radial bearing bushing.

8. Centrifugal pump according to one of Claims 1 to 7, **characterized in that** at least one mating element is in the form of an axial bearing ring.

9. Centrifugal pump according to one of Claims 1 to 8, **characterized in that** at least one mating element (9, 13) has at least one radial channel (17) on at least one end face.

10. Centrifugal pump according to one of Claims 1 to 9, **characterized in that** the surface hardness of the carbon-coated elements (12, 14, 16) is more than 20 GPa, preferably more than 30 GPa, in particular more than 40 GPa and/or less than 120 GPa, preferably less than 110 GPa, in particular less than 100 GPa.

## Revendications

1. Pompe centrifuge avec au moins un agencement de palier lisse hydrodynamique (18, 19), chaque agencement de palier lisse (18, 19) comprenant au moins un élément (12, 14, 16) relié de manière solidaire en rotation à un arbre (10) et au moins un contre-élément fixe (9, 13), l'élément (12, 14, 16) étant muni d'une couche de carbone, celle-ci consistant en une couche de carbone amorphe et le contre-élément (9, 13) présentant un matériau contenant du graphite, **caractérisé en ce qu'**il s'agit d'une couche de carbone amorphe tétraédrique exempte d'hydrogène, la valeur de rugosité moyenne Rₐ de la couche de carbone étant inférieure à 0,7 µm et le contre-élément (9, 13) étant constitué de plus de 70 % en poids de graphite.

2. Pompe centrifuge selon la revendication 1, **caractérisée en ce que** l'épaisseur de la couche de carbone est supérieure à 0,5 µm, de préférence supérieure à 1,0 µm, notamment supérieure à 1,5 µm et/ou inférieure à 14 µm, de préférence inférieure à 12 µm, notamment inférieure à 8 µm.

3. Pompe centrifuge selon l'une quelconque des revendications 1 à 2, **caractérisée en ce que** la valeur de rugosité moyenne Rₐ de la couche de carbone est inférieure à 0,5 µm, notamment inférieure à 0,3 µm.

4. Pompe centrifuge selon l'une quelconque des revendications 1 à 3, **caractérisée en ce que** le contre-élément (9, 13) est constitué de plus de 80 % en poids, notamment plus de 90 % en poids, de graphite.

5. Pompe centrifuge selon l'une quelconque des revendications 1 à 4, **caractérisée en ce qu'**au moins un contre-élément (9, 13) est constitué principalement d'un graphite lié par une résine.

6. Pompe centrifuge selon l'une quelconque des revendications 1 à 5, **caractérisée en ce qu'**au moins un contre-élément (13) est configuré sous forme de coussinet axial-radial.

7. Pompe centrifuge selon l'une quelconque des revendications 1 à 6, **caractérisée en ce qu'**au moins un contre-élément (9) est configuré sous forme de coussinet radial.

8. Pompe centrifuge selon l'une quelconque des revendications 1 à 7, **caractérisée en ce qu'**au moins un contre-élément est configuré sous forme de bague de palier axiale.

9. Pompe centrifuge selon l'une quelconque des revendications 1 à 8, **caractérisée en ce qu'**au moins un contre-élément (9, 13) présente sur au moins un côté frontal au moins un canal (17) s'étendant radialement.

10. Pompe centrifuge selon l'une quelconque des revendications 1 à 9, **caractérisée en ce que** la dureté de surface des éléments revêtus de carbone (12, 14, 16) est supérieure à 20 GPa, de préférence supérieure à 30 GPa, notamment supérieure à 40 GPa et/ou inférieure à 120 GPa, de préférence inférieure à 110 GPa, notamment inférieure à 100 GPa.
